# EUROPÄISCHE PATENTSCHRIFT

(11) **EP 0 938 539 B1**
(45) Veröffentlichungstag und Bekanntmachung des Hinweises auf die Patenterteilung: **16.08.2001**
(21) Anmeldenummer: 97950103.8
(22) Anmeldetag: 05.11.1997
(51) Int. Cl.: C11D 3/20, C11D 17/06

(54) **VERWENDUNG VON ALKOXYLIERUNGSPRODUKTEN MINDESTENS DREIWERTIGER ALKOHOLE ZUR ERHÖHUNG DER LÖSEGESCHWINDIGKEIT VON TEILCHENFÖRMIGEN WASCHMITTELFORMULIERUNGEN IN WASSER**
USE OF ALKOXYLATION PRODUCTS OF AT LEAST TRIVALENT ALCOHOLS FOR INCREASING THE DISSOLUTION RATE IN WATER OF PARTICULATE LAUNDRY DETERGENT COMPOSITIONS
USAGE DES PRODUITS D'ALCOXYLATION D' ALCOOLS AU MOINS TRIVALENTS POUR AUGMENTER LA VITESSE DE DISSOLUTION DANS L' EAU DES DETERGENTS PARTICULAIRES POUR LE LINGE

(30) Priorität: 18.11.1996 DE 19647609; 22.11.1996 DE 19648504
(43) Veröffentlichungstag der Anmeldung: 01.09.1999
(73) Patentinhaber: BASF AKTIENGESELLSCHAFT, 67056 Ludwigshafen (DE)
(72) Erfinder: HUFF, Jürgen, D-67281 Bissersheim (DE); JÄGER, Hans-Ulrich, D-67434 Neustadt (DE); AUS DEM KAHMEN, Martin, D-67071 Ludwigshafen (DE); KRONER, Matthias, D-67304 Eisenberg (DE); LUX, Jürgen, Alfred, D-67150 Niederkirchen (DE); OETTER, Günter, D-67227 Frankenthal (DE)
(86) Internationale Anmeldenummer: EP9706113
(87) Internationale Veröffentlichungsnummer: WO9822565

(56) Entgegenhaltungen:
- WO-A-95/31525
- WO-A-95/34625
- DE-A- 4 124 701
- DE-A- 19 620 364
- DATABASE WPI Section Ch, Week 9227 Derwent Publications Ltd., London, GB; Class D25, AN 92-222659 XP002042106 & JP 04 146 998 A (LION CORP) , 20.Mai 1992
- DATABASE WPI Section Ch, Week 9010 Derwent Publications Ltd., London, GB; Class A97, AN 90-071356 XP002042109 & JP 02 024 399 A (DAIICHI KOGYO SEIYAKU CO LTD) , 26.Januar 1990

## Beschreibung

Die Erfindung betrifft die Verwendung von Umsetzungsprodukten von hydrophobierten, mit Ethylenoxid und/oder Propylenoxid alkoxylierten mindestens dreiwertigen Alkoholen als Zusatz zu teilchenförmigen Waschmittelformulierungen zur Erhöhung ihrer Lösegeschwindigkeit in Wasser in Mengen von 0,1 bis 10 Gew.-%, bezogen auf die Waschmittelformulierungen.

Teilchenförmige Waschmittel sollen beim Eintragen in Wasser möglichst rasch in die Einzelbestandteile zerfallen, um die fertige Waschlauge zu bilden. Die Lösegeschwindigkeit mancher teilchenförmiger Waschmittelformulierungen, insbesondere von Kompaktwaschmitteln, die beispielsweise eine Schüttdichte von mindestens 550 g/1 haben, beim Zusammenbringen mit Wasser ist jedoch noch verbesserungsbedürftig.

Aus der JP-A-4/146998 sind teilchenförmige Waschmittelformulierungen mit hoher Schüttdichte bekannt, die mindestens dreiwertige Alkohole zur Verbesserung der Auflösbarkeit der Waschmittel bei niedrigen Temperaturen enthalten.

Aus der WO-A-95/34625 sind teilchenförmige Waschmittelformulierungen mit einer Dichte von mindestens 650 g/l bekannt, die 0,1 bis 5 Gew.-% eines wasserlöslichen Saccharids enthalten. Die aus dieser Literaturstelle bekannten Kompaktwaschmittelhaben eine verbesserte Löslichkeit in Waschflotten bei Temperaturen bis zu 30°C.

Aus der älteren, nicht vorveröffentlichten Anmeldung WO-A-97/44426 ist die Verwendung von mindestens dreiwertigen Alkoholen und deren Umsetzungsprodukten mit Ethylenoxid und/oder Propylenoxid als Zusatz zu teilchenförmigen Waschmittelformulierungen in Wasser in Mengen von 0,1 bis 5 Gew.-%, bezogen auf die Waschmittelformulierungen, bekannt.

Der Erfindung liegt die Aufgabe zugrunde, ein Waschmitteladditiv zur Verfügung zu stellen, das zu einer Erhöhung der Auflösegeschwindigkeit von teilchenförmigen Waschmitteln in Wasser führt.

Die Aufgabe wird erfindungsgemäß gelöst durch Verwendung von
- Umsetzungsprodukten, die durch Reaktion von mindestens dreiwertigen Alkoholen mit C₄- bis C₃₂-Epoxiden oder Styroloxid und anschließende Alkoxylierung mit Ethylenoxid und/oder Propylenoxid erhältlich sind,
- Umsetzungsprodukten, die durch Reaktion von mindestens dreiwertigen Alkoholen mit Ethylenoxid und/oder Propylenoxid und anschließende Hydrophobierung mit
   (a) C₄- bis C₃₂-Epoxiden und/oder Styroloxid,
   (b) C₁- bis C₂₀-Alkylierungsmitteln oder
   (c) Fettsäuren mit 1 bis 5 C-Atomen im Molekül erhältlich sind,
als Zusatz zu teilchenförmigen Waschmittelformul-ierungen zur Erhöhung ihrer Lösegeschwindigkeit in Wasser in Mengen von 0,1 bis 10 Gew.-%, bezogen auf die Waschmittelformulierungen.

Als mindestens dreiwertige Alkohole eignen sich beispiel sweise Glycerin, Diglycerin, Triglycerin, Tetraglycerin, Pentaglycerin, Hexaglycerin, Heptaglycerin und Octaglycerin, Pentaerythrit, Trimethylolpropan, Erythrit, Mannit, Sorbit, Saccharose, Glukose und Polyvinylalkohole mit Molmassen bis zu 20 000. Anstelle der einzelnen Verbindungen kann man auch Mischungen der genannten Verbindungen einsetzen. Von besonderem technischen Interesse ist beispielsweise die Verwendung von hydrierten Stärkehydrolysaten oder hydrierten Glukosesirupen. Beispielsweise kann man im Handel erhältliche hydrierte Stärkehydrolysate der Firma Cerestar einsetzen, die unter dem Warenzeichen SORBIDEX® 200 und SORBIDEX 122 angeboten werden.

Die Umsetzungsprodukte von mindestens dreiwertigen Alkoholen mit Ethylenoxid und/oder Propylenoxid und Verfahren zu ihrer Herstellung gehören zum Stand der Technik. Die beispielsweise durch Umsetzung von Glycerin,Erythrit, Pentaerythrit, Trimethylolpropan, Mannit oder Sorbit mit Ethylenoxid und/oder Propylenoxid in Gegenwart der üblichen Alkoxylierungskatalysatoren wie KOH, NaOH, Alkalialkoholate wie Natriummethylat, Ca-Hydroxid, Ca-Oxid oder Trägerkatalysatoren herpestellten alkoxylierten Produkte können eine breite oder auch eine enge Molmassenverteilung aufweisen. Von besonderer Bedeutung sind hierbei die Umsetzungsprodukte von Glycerin, Erythrit, Pentaerythrit, Trimethylolpropan, Mannit oder Sorbit mit Ethylenoxid.

Beispielsweise setzt man 1 Mol eines mindestens dreiwertigen Alkohols mit 1 bis 100 Mol Ethylenoxid um. Diese Produkte können modifiziert werden, indem man sie gegebenenfalls mit 1 bis zu 35, vorzugsweise 1 bis 20 und besonders bevorzugt 1 bis 15 Mol Propylenoxid weiterreagieren läßt. Bei der Herstellung von modifizierten Anlagerungsprodukten des Ethylenoxids kann man jedoch auch so vorgehen, daß man ein Mischgas aus Ethylenoxid und Propylenoxid auf die mindestens dreiwertigen Alkohole einwirken läßt. Eine weitere Variationsmöglichkeit ist dadurch gegeben, daß man die genannten Alkohole zunächst mit Propylenoxid und anschließend mit Ethylenoxid umsetzt. Die Umsetzungsprodukte von 1 Mol eines mindestens 3-wertigen Alkohols mit 1 bis 100 Mol Ethylenoxid und 1 bis 35 Mol Propylenoxid können auch aus Blöcken von Ethylenoxid-/Propylenoxid-/Ethylenoxid-Einheiten oder aus Blöcken von Propylenoxid-/Ethylenoxid-/Propylenoxid-Einheiten aufgebaut sein. Innerhalb der oben angegebenen Grenzen für Ethylenoxid und Propylenoxid können die Umsetzungsprodukte eine beliebige Blocklänge und eine beliebige Abfolge von Blöcken aufweisen. So kann man beispielsweise an 1 Mol eines mindestens 3-wertigen Alkohols nacheinander 3 bis 9 Mol Ethylenoxid, 3 bis 6 Mol Propylenoxid und 3 bis 9 Mol Ethylenoxid anlagern. An diese Umsetzungsprodukte können gegebenenfalls weitere Ethylenoxid-und/oder Propylenoxid-Einheiten oder Blöcke angelagert werden. Weitere geeignete Umsetzungsprodukte enthalten z.B. Blöcke von 5 bis 10 Ethylenoxid-Einheiten, 5 bis 30 Propylenoxid-Einheiten und gegebenenfalls einen zusätzlichen Block von 50 bis 80 Ethylenoxid-Einheiten. Besonders bevorzugt werden Umsetzungsprodukte von 1 Mol Trimethylolpropan mit 1 bis 100 Mol Ethylenoxid eingesetzt, wobei man meistens Umsetzungsprodukte von 1 Mol Trimethylolpropan oder Glycerin mit 3 bis 35 Mol Ethylenoxid anwendet.

Besonders wirksame Produkte für die Erhöhung der Lösegeschwindigkeit von teilchenförmigen Waschmittelformulierungen sind hydrophobierte Umsetzungsprodukte von mindestens dreiwertigen niedermolekularen Alkoholen mit Ethylenoxid und/oder Propylenoxid. Die Molmasse dieser Alkohole beträgt beispielsweise bis zu 600. Die nicht hydrophobierten Umsetzungsprodukte und Verfahren zu ihrer Herstellung wurden oben bereits beschrieben.

Die Hydrophobierung kann beispielsweise durch Umsetzung der obengenannten Ausgangsstoffe mit C₄- bis C₃₂-Epoxiden, vorzugsweise C₄- bis C₁₂-Epoxiden und Styroloxid vorgenommen werden. So setzt man beispielsweise hydrophobierte, alkoxylierte mindestens dreiwertige Alkohole ein, die durch Alkoxylierung von 1 Mol eines mindestens dreiwertigen Alkohols mit 1 bis 100 Mol Ethylenoxid und/oder 1 bis 35 Mol Propylenoxid erhältlich sind und die 1 bis 30 C₄- bis C₃₂-Epoxid- oder Styroloxid-Einheiten als hydrophobierenden Teil des Moleküls blockförmig oder in statistischer Verteilung enthalten. Die hydrophoben Bestandteile können beispielsweise auch direkt an die mindestens dreiwertigen Alkohole angelagert sein, indem man diese Alkohole mit C₄- bis C₃₂-Epoxiden oder Styroloxid umsetzt und die so erhältlichen Verbindungen anschließend mit Ethylenoxid und/oder Propylenoxid alkoxyliert.

Bevorzugt werden solche Strukturen, die Blocke von C₄- bis C₃₂ - Ep-oxiden oder von Styroloxid als Endgruppe enthalten.

Weitere erfindungsgemäß zu verwendende Verbindungen erhält man aus den oben beschriebenen Ausgangsprodukten - den mit 1 bis 100 Mol Ethylenoxid und/oder 1 bis 35 Mol Propylenoxid umgesetzten mindestens dreiwertigen Alkoholen - durch anschließenden End-gruppenverschluß mit C₁- bis C₂₀-Alkylierungsmitteln, wobei die OH-Endgruppen der Ausgangsstoffe verethert werden. Die endständigen OH-Gruppen der Ausgangsstoffe werden beispielsweise zu 50 bis 100, vorzugsweise zu 70 bis 95 % mit Alkylierungsmitteln verethert. Geeignete Alkylierungsmittel sind z.B. C₁- bis C₂₀-Alkylhalogenide, insbesondere die entsprechenden Alkylchloride und Alkylbromide. Geeignet sind beispielsweise Methylchlorid, Methylbromid, Ethylchlorid, Ethylbromid, Isopropylchlorid, Isopropylbromid, n-Butyljodid, n-Butylchlorid, n-Butylbromid, Isobutylchlorid, Isobutylbromid, n-Hexylchlorid, Isooctylbromid, Decylbromid, Dodecylchlorid, Dodecylbromid, Palmitylchlorid und Stearylchlorid. Weitere geeignete Alkylierungsmittel sind Dialkylschwefelsäureester wie Dimethylsulfat oder Diethylsulfat.

Andere erfindungsgemäß zu verwendende Verbindungen erhält man durch Verestern der mit Ethylenoxid und/oder Propylenoxid alkoxylierten, mindestens dreiwertigen Alkohole mit C₁- bis C₅-Carbonsäuren. Die endständigen OH-Gruppen der Ausgangsstoffe werden dabei zu 50 bis 100 % verestert. Bevorzugt eingesetzte Fettsäuren sind Ameisensäure, Essigsäure und Propionsäure.

Der hydrophobe Anteil der erfindungsgemäß zu verwendenden Verbindungen kann z.B. bis zu 80 Gew.-% betragen. Die erfindungsgemäß zu verwendenden Verbindungen sind vorzugsweise wasserlöslich. Beispielsweise lösen sich mindestens 1 g dieser Verbindungen in 1 l Wasser bei 20°C.

Die erfindungsgemäß zu verwendenden Zusätze sind in Mengen von 0,1 bis 10, vorzugsweise 0,5 bis 5 und insbesondere von 0,5 bis 2,5 Gew.-% in der Waschmittelformulierung enthalten. Sie werden vorzugsweise mit den übrigen Waschmittelbestandteilen möglichst homogen vermischt. Man kann sie jedoch auch auf die Oberfläche der feinteiligen Waschmittelformulierungen auftragen und eindiffundieren lassen.

Die Waschmittel können pulverförmig sein oder als Granulat, Schuppen, Stränge, Kugeln, Plättchen oder Tabletten vorliegen. Der mittlere Teilchendurchmesser der teilchenförmigen Waschmittelformulierungen beträgt beispielsweise 200 µm bis 5 mm und liegt vorzugsweise in dem Bereich von 1 bis 3 mm. Man kann die Waschmittelformulierungen jedoch auch so portionieren, daß für einen Waschgang in einer Waschmaschine nur eine Kugel oder eine Tablette erforderlich ist. Solche Kugeln oder Tabletten haben dann einen weitaus größeren mittleren Teilchendurchmesser als oben angegeben. Der Vorteil solcher relativ großvolumiger Teilchen liegt in der einfachen Dosierung. Bei Einsatz der erfindungsgemäß zu verwendenden hydrophobierten, alkoxylierten, mindestens 3-wertigen Alkohole in handelsüblichen Waschmitteln tritt außer der beschriebenen Erhöhung der Lösegeschwindigkeit eine beträchtliche Erhöhung der schmutzablösenden Wirkung (Soil release-Effekt) des Waschmittels ein.

Bei den Waschmitteln kann es sich um Vollwaschmittel oder um Spezialwaschmittel handeln. Als Tenside kommen sowohl anionische als auch nichtionische oder Mischungen aus anionischen und nichtionischen Tensiden in Betracht. Der Tensidgehalt der Waschmittel beträgt vorzugsweise 8 bis 30 Gew.-%.

Geeignete anionische Tenside sind beispielsweise Fettalkoholsulfate von Fettalkoholen mit 8 bis 22, vorzugsweise 10 bis 18 Kohlenstoffatomen, z.B. C₉ - bis C₁₁-Alkoholsulfate, C₁₂- bis C₁₃-Alkoholsulfate, Cetylsulfat, Myristylsulfat, Palmitylsulfat, Stearylsulfat und Talgfettalkoholsulfat.

Weitere geeignete anionische Tenside sind sulfatierte, ethoxylierte C₈- bis C₂₂-Alkohole bzw. deren lösliche Salze. Verbindungen dieser Art werden beispielsweise dadurch hergestellt, daß man zunächst einen C₈- bis C₂₂-, vorzugsweise einen C₁₀- bis C₁₈-Alkohol alkoxyliert und das Alkoxylierungsprodukt anschließend sulfatiert. Für die Alkoxylierung verwendet man vorzugsweise Ethylenoxid, wobei man pro Mol Fettalkohol 2 bis 50, vorzugsweise 3 bis 20 Mol, Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte C₈- bis C₂₂-Alkohole, die Ethylenoxid und Propylenoxid oder Ethylenoxid und Butylenoxid enthalten. Die alkoxylierten C₈ - bis C₂₂-Alkohole können die Ethylenoxid-, Propylenoxid- und Butylenoxideinheiten in Form von Blöcken oder in statistischer Verteilung enthalten.

Weitere geeignete anionische Tenside sind Alkylsulfonate wie C₈- bis C₂₄-, vorzugsweise C₁₀-C₁₈-Alkansulfonate sowie Seifen wie beispielsweise die Salze von C₈- bis C₂₄-Carbonsäuren.

Weitere geeignete anionische Tenside sind C-₉- bis C₂₀-linear-Alkylbenzolsulfonate (LAS). Vorzugsweise werden die erfindungsgemäßen Polymeren in LAS-armen Waschmittelformulierungen mit weniger als 4 %, besonders bevorzugt in LAS - freien Formulierungen eingesetzt.

Die anionischen Tenside werden dem Waschmittel vorzugsweise in Form von Salzen zugegeben. Geeignete Kationen in diesen Salzen sind Alkalimetallionen wie Natrium-, Kalium-, Lithium- und Ammoniumionen wie z.B. Hydroxyethylammonium-, Di(hydroxy-ethyl)ammonium- und Tri(hydroxyethyl)ammoniumionen.

Als nichtionische Tenside eignen sich beispielsweise alkoxylierte C₈- bis C₂₂-Alkohole. Die Alkoxylierung kann mit Ethylenoxid, Propylenoxid und/oder Butylenoxid durchgeführt werden. Als Tensid einsetzbar sind hierbei sämtliche alkoxylierten Alkohole, die mindestens zwei Moleküle eines vorstehend genannten Alkylenoxids addiert enthalten. Auch hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Pro Mol Alkohol verwendet man 2 bis 5, vorzugsweise 3 bis 20 Mol mindestens eines Alkylenoxids. Vorzugsweise setzt man als Alkylenoxid Ethylenoxid ein. Die Alkohole haben vorzugsweise 10 bis 18 Kohlenstoffatomen.

Eine andere Klasse nichtionischer Tenside sind Alkylpolyglucoside mit 8 bis 22, vorzugsweise 10 bis 18 Kohlenstoffatomen in der Alkylkette. Diese Verbindungen enthalten 1 bis 20, vorzugsweise 1,1 bis 5 Glucosideinheiten.

Eine andere Klasse nichtionischer Tenside sind N-Alkylglucamide der allgemeinen Struktur I bzw. II 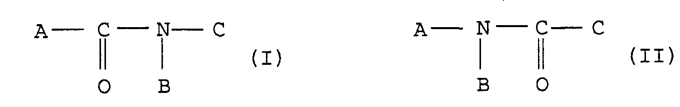 wobei A ein C₆- bis C₂₂-Alkyl, B ein H oder C₁- bis C₄-Alkyl und C ein Polyhydroxyalkyl-Rest mit 5 bis 12 C-Atomen und mindestens 3 Hydroxygruppen ist. Vorzugsweise steht A für C₁₀- bis C₁₈-Alkyl-, B für CH₃- und C für einen C₅ oder C₆-Rest. Beispielsweise erhält man derartige Verbindungen durch die Acylierung von reduzierend aminierten Zuckern mit Säurechloriden von C₁₀-C₁₈-Carbonsäuren. Die Waschmittelformulierungen enthalten vorzugsweise mit 3-12 Mol Ethylenoxid ethoxylierte C₁₀-C₁₆-Alkohole, besonders bevorzugt ethoxylierte Fettalkohole als nichtionische Tenside.

Weitere, bevorzugt in Betracht kommende Tenside sind die aus der WO-A-95/11225 bekannten endgruppenverschlossenen Fettsäureamidalkoxylate der allgemeinen Formel

R¹―CO―NH―(CH₂)ₙ―O―(AO)ₓ―R² (III),

in der
R¹ einen C₅- bis C₂₁-Alkyl- oder -Alkenylrest bezeichnet,
R² eine C₁- bis C₄-Alkylgruppe bedeutet,
A für C₂- bis C₄-Alkylen steht,
n die Zahl 2 oder 3 bezeichnet und
x einen Wert von 1 bis 6 hat.

Beispiele für solche Verbindungen sind die Umsetzungsprodukte von n-Butyltriglykolamin der Formel H₂N - (CH₂ - CH₂-O)₃-C₄H₉ mit Dodecansäuremethylester oder die Reaktionsprodukte von Ethyltetraglykolamin der Formel H₂N - (CH₂ - CH₂ - O)₄ - C₂H₅ mit einem handelsüblichen Gemisch von gesättigten C₈- bis C₁₈-Fettsäuremethylestern.

Die pulver- oder granulatförmigen Waschmittel enthalten außerdem einen oder mehrere anorganische Builder. Als anorganische Buildersubstanzen eignen sich alle üblichen anorganischen Builder wie Alumosilikate, Silikate, Carbonate und Phosphate.

Geeignete anorganische Builder sind z.B. Alumosilikate mit ionenaustauschenden Eigenschaften wie z.B. Zeolithe. Verschiedene Typen von Zeolithen sind geeignet, insbesondere Zeolith A, X, B, P, MAP und HS in ihrer Na-Form oder in Formen, in denen Na teilweise gegen andere Kationen wie Li, K, Ca, Mg oder Ammonium ausgetauscht sind. Geeignete Zeolithe sind beispielsweise beschrieben in EP-A-0 038 591, EP-A-0 021 491, EP-A-0 087 035, US-A-4 604 224, GB-A-2 013 259, EP-A-0 522 726, EP-A-0 384 070A und WO-A-94/24251.

Weitere geeignete anorganische Builder sind z.B. amorphe oder kristalline Silikate wie z.B. amorphe Disilikate, kristalline Disilikate wie das Schichtsilikat SKS-6 (Hersteller Hoechst AG). Die Silikate können in Form ihrer Alkali-, Erdalkali- oder Ammoniumsalze eingesetzt werden. Vorzugsweise werden Na-, Liund Mg-Silikate eingesetzt.

Weitere geeignete anorganische Buildersubstanzen sind Carbonate und Hydrogencarbonate. Diese können in Form ihrer Alkali-, Erdalkali- oder Ammoniumsalze eingesetzt werden. Vorzugsweise werden Na-, Li- und Mg-Carbonate bzw. Hydrogencarbonate, insbesondere Natriumcarbonat und/oder Natriumhydrogencarbonat eingesetzt.

Die anorganischen Builder können in den Waschmitteln in Mengen von 0 bis 60 Gew.-% zusammen mit gegebenenfalls zu verwendenden organischen Cobuildern enthalten sein. Die anorganischen Builder können entweder allein oder in beliebigen Kombinationen miteinander in das Waschmittel eingearbeitet werden. In pulver- oder granulatförmigen Waschmitteln werden sie in Mengen von 10 bis 60 Gew.-%, vorzugsweise in Mengen von 20 bis 50 Gew.-% zugesetzt.

In pulver- oder granulatförmigen oder anderen festen Waschmittelformulierungen sind organische Cobuilder in Mengen von 0,1 bis 20 Gew.-%, vorzugsweise in Mengen von 1 bis 15 Gew.-% zusammen mit anorganischen Buildern enthalten. Die pulver- oder granulatförmigen Vollwaschmittel können außerdem als sonstige übliche Bestandteile ein Bleichsystem bestehend aus mindestens einem Bleichmittel, gegebenenfalls in Kombination mit einem Bleichaktivator und/oder einem Bleichkatalysator enthalten.

Geeignete Bleichmittel sind Perborate und Percarbonate in Form ihrer Alkali- insbesondere ihrer Na-Salze. Sie sind in Mengen von 5 bis 30 Gew.-%, vorzugsweise 10 bis 25 Gew.-% in den Formulierungen enthalten. Weitere geeignete Bleichmittel sind anorganische und organische Persäuren in Form ihrer Alkali- oder Magnesiumsalze oder teilweise auch in Form der freien Säuren. Beispiele für geeignete organische bzw. -Salze sind z.B. Mg-Monoterephthalat, Phthalimidopercapronsäure und Dodecan-1,10-dipersäure. Beispiel für ein anorganisches Persäuresalz ist Kaliumperoxomonosulfat (Oxon).

Geeignete Bleichaktivatoren sind z.B.
- Acylamine wie Tetraacetylethylendiamin, Tetraacetylglycoluril, N,N'-Diacetyl-N,N'-dimethylharnstoff und 1,5-Diacetyl-2,4-dioxohexahydro-1,3,5-triazin
- acylierte Lactame wie beispielsweise Acetylcaprolactam, Octanoylcaprolactam und Benzoylcaprolactam
- substituierte Phenolester von Carbonsäuren wie z.B. Na-acetoxybenzolsulfonat, Na-octanoyloxybenzolsulfonat und Na-nonanoyloxybenzolsulfonat
- acylierte Zucker wie z.B. Pentaacetylglucose
- Anthranilderivate wie z.B. 2-Methylanthranil oder 2-Phenylanthranil
- Enolester wie z.B. Isopropenylacetat
- Oximester wie z.B. O-Acetylacetonoxim
- Carbonsäureanhydride, wie z.B. Phthalsäureanhydrid oder Essigsäureanhydrid.

Vorzugsweise werden Tetraacetylethylendiamin und Na-nonanoyloxybenzolsulfonate als Bleichaktivatoren eingesetzt. Die Bleichaktivatoren werden Vollwaschmitteln in Mengen von 0,1 bis 15 Gew.-%, vorzugsweise in Mengen von 1,0 bis 8,0 Gew.-%, besonders bevorzugt in Mengen von 1,5 bis 6,0 Gew.-% zugesetzt.

Geeignete Bleichkatalysatoren sind quaternisierte Imine und Sulfonimine wie sie in US-A-5 360 568, US-A-5 360 569 und EP-A-0 453 003 beschrieben sind und Mn-Komplexe, vgl. z.B. WO-A-94/21777. Falls Bleichkatalysatoren in den Waschmittelformulierungen eingesetzt werden, sind sie darin in Mengen bis zu 1,5 Gew.-%, vorzugsweise bis zu 0,5 Gew.-%, im Falle der sehr aktiven Mangankomplexe in Mengen bis zu 0,1 Gew.% enthalten.

Die Waschmittel enthalten vorzugsweise ein Enzymsystem. Dabei handelt es sich um üblicherweise in Waschmitteln eingesetzte Proteasen, Lipasen, Amylasen sowie Cellulasen. Das Enzymsystem kann auf ein einzelnes der Enzyme beschränkt sein oder eine Kombination verschiedener Enzyme beinhalten. Von den handelsüblichen Enzymen werden den Waschmitteln in der Regel Mengen von 0,1 bis 1,5 Gew.-%, vorzugsweise 0,2 bis 1,0 Gew.-% des konfektionierten Enzyms zugesetzt. Geeignete Proteasen sind z.B. Savinase® und Esperase® (Hersteller Novo Nordisk). Eine geeignete Lipase ist z.B. Lipolase® (Hersteller Novo Nordisk). Eine geeignete Cellulase ist z.B. Celluzym® (Hersteller Novo Nordisk).

Die Waschmittel enthalten als sonstige übliche Bestandteile vorzugsweise Soil release Polymere und/oder Vergrauungsinhibitoren. Dabei handelt es sich z.B. um
- Polyester aus Polyethylenoxiden mit Ethylenglykol und/oder Propylenglykol und aromatischen Dicarbonsäuren oder aromatischen und aliphatischen Dicarbonsäuren. Polyester aus einseitig endgruppenverschlossenen Polyethylenoxiden mit zweiund/oder mehrwertigen Alkoholen und Dicarbonsäuren. Derartige Polyester sind bekannt, vgl. beispielsweise US-A-3 557 039, GB-A-1 154 730, EP-A-0 185 427, EP-A-0 241 984, EP-A-0 241 985, EP-A-0 272 033 und US-A-5 142 020.

Weitere geeignete Soil release Polymere sind amphiphile Pfropfoder Copolymere von Vinyl- und/oder Acrylester auf Polyalkylenoxiden, vgl. US-A-4 746 456, US-A-4 846 995, DE-A-3 711 299, US-A-4 904 408, US-A-4 846 994 und US-A-4 849 126 oder modifizierte Cellulosen wie z.B. Methylcellulose, Hydroxypropylcellulose oder Carboxymethylcellulose.

Vergrauungsinhibitoren und Soil release Polymere sind in den Waschmittelformulierungen zu 0 bis 2,5 Gew.-%, vorzugsweise zu 0,2 bis 1,5 Gew.-%, besonders bevorzugt zu 0,3 bis 1,2 Gew.-% enthalten. Bevorzugt eingesetzte Soil release Polymere sind die aus der US-A-4 746 456 bekannten Pfropfpolymeren von Vinylacetat auf Polyethylenoxid der Molmasse 2500 - 8000 im Gewichtsverhältnis 1,2:1 bis 3,0:1, sowie handelsübliche Polyethylenterephthalat/polyoxyethylenterephthalate der Molmasse 3000 bis 25000 aus Polyethylenoxiden der Molmasse 750 bis 5000 mit Terephthalsäure und Ethylenoxid und einem Molverhältnis von Polyethylenterephthalat zu Polyoxyethylenterephthalat von 8:1 bis 1:1 und die aus der DE-A-4 403 866 bekannten Blockpolykondensate, die Blöcke aus (a) Ester-Einheiten aus Polyalkylenglykolen einer Molmasse von 500 bis 7500 und aliphatischen Dicarbonsäuren und/oder Monohydroxymonocarbonsäuren und (b) Ester-Einheiten aus aromatischen Dicarbonsäuren und mehrwertigen Alkoholen enthalten. Diese amphiphilen Blockcopolymerisate haben Molmassen von 1500 bis 25000.

Ein typisches pulver- oder granulatförmiges Vollwaschmittel kann beispielsweise folgende Zusammensetzung aufweisen:
- 3 bis 50, vorzugsweise 8 bis 30 Gew.-% mindestens eines anionischen und/oder nichtionischen Tensids,
- 5 bis 50, vorzugsweise 15 bis 42,5 Gew.-% mindestens eines anorganischen Builders,
- 5 bis 30, vorzugsweise 10 bis 25 Gew.-% eines anorganischen Bleichmittels,
- 0,1 bis 15, vorzugsweise 1 bis 8 Gew.-% eines Bleichaktivators,
- 0 bis 1, vorzugsweise bis höchstens 0,5 Gew.-% eines Bleichkatalysators,
   0,05 bis 5 Gew.-%, vorzugsweise 0,2 bis 2,5 Gew.-% eines Farbübertragungsinhibitors auf Basis von wasserlöslichen Homopolymerisaten von N-Vinylpyrrolidon oder N-Vinylimidazol, wasserlöslichen Copolymerisaten aus N-Vinylimidazol und N-Vinylpyrrolidon, vernetzten Copolymerisaten aus N-Vinylimidazol und N-Vinylpyrrolidon mit einer Teilchengröße von 0,1 bis 500, vorzugsweise bis zu 250 µm, wobei diese Copolymerisate 0,01 bis 5, vorzugsweise 0,1 bis 2 Gew.-% N,N'-Divinylethylenharnstoff als Vernetzer enthalten. Weitere Farbübertragungsinhibitoren sind wasserlösliche und auch vernetzte Polymerisate von 4-Vinylpyridin-N-oxid, die durch Polymerisieren von 4-Vinylpyridin und anschließende Oxidation der Polymeren erhältlich sind,
- 0,1 bis 20, vorzugsweise 1 bis 15 Gew.-% mindestens einer modifizierten Polyasparaginsäure als organischer Cobuilder,
- 0,2 bis 1,0 Gew.-% Protease,
- 0,2 bis 1,0 Gew.-% Lipase,
- 0,3 bis 1,5 Gew.-% eines Soil release Polymers.

In farbschonenden Spezialwaschmitteln (beispielsweise in sogenannten Colorwaschmitteln) wird oft auf ein Bleichsystem vollständig oder teilweise verzichtet. Ein typisches pulver- oder granulatförmiges Colorwaschmittel kann beispielsweise folgende Zusammensetzung aufweisen:
- 3 bis 50, vorzugsweise 8 bis 30 Gew.-% mindestens eines anionischen und/oder nichtionischen Tensids,
- 10 bis 60, vorzugsweise 20 bis 55 Gew.-% mindestens eines anorganischen Builders,
- 0 bis 15, vorzugsweise 0 bis 5 Gew.-% eines anorganischen Bleichmittels,
- 0,05 bis 5 Gew.-%, vorzugsweise 0,2 bis 2,5 Gew.-% eines Farbübertragungsinhibitors, vgl. oben,
- 0,1 bis 20, vorzugsweise 1 bis 15 Gew.-% mindestens einer oben beschriebenen modifizierten Polyasparaginsäure als organischen Cobuilder,
- 0,2 bis 1,0 Gew.-% Protease,
- 0,1 bis 20, vorzugsweise 1 bis 15 Gew.-% mindestens einer oben beschriebenen modifizierten Polyasparaginsäure als organischen Cobuilder,
- 0,2 bis 1,0 Gew.-% Protease,
- 0,2 bis 1,0 Gew.-% Cellulase,
- 0,2 bis 1,5 Gew.-% eines Soil release Polymers, z.B. ein Pfropfpolymerisat von Vinylacetat auf Polyethylenglykol.

Die pulver- oder granulatförmigen Waschmittel können als sonstige übliche Bestandteile bis zu 60 Gew.-% an anorganischen Stellmitteln enthalten. Üblicherweise wird hierfür Natriumsulfat verwendet. Vorzugsweise sind die Waschmittel aber arm an Stellmitteln, d.h. sie enthalten bis zu 20 Gew.-%, besonders bevorzugt bis zu 8 Gew.-% an Stellmitteln. Die Waschmittel können unterschiedliche Schüttdichten im Bereich von 300 bis 1000 g/l besitzen. Moderne Kompaktwaschmittel besitzen in der Regel hohe Schüttdichten,z.B. 550 bis 1000 g/l, und zeigen einen Granulataufbau.

Die Waschmittel können gegebenenfalls weitere übliche Zusätze enthalten. Als weitere Zusätze können gegebenenfalls z.B. Komplexbildner, Phosphonate, optische Aufheller, Farbstoffe, Parfümöle, Schaumdämpfer und Korrosionsinhibitoren enthalten sein. Sie können außerdem bis zu 20 Gew.-% Wasser enthalten.

### Vergleichsbeispiel 1

25 g handelsübliche Persil® Megaperls werden mit 3,5 g Wasser bei 60°C zu einem Brei verrührt. Aus 1,00 g dieser Mischung formt man eine Kugel. Man bestimmt die Zeit, die für einen vollständigen Zerfall der Kugel in die Einzelbestandteile unter Bildung einer Waschflotte erforderlich ist, in dem man die Kugel in 500 ml Wasser bei 30 °C mit einem Magnetrührer bei 500 U/min rührt. Hierfür benötigte man 35 min.

### Vergleichsbeispiele 2 bis 6

Man verfährt wie in Vergleichsbeispiel beschrieben, werden jedoch zusatzlich 0.5g der in der Tabelle angegebenen Ethylenoxidderivate, mit dem Brei innig vermischt. Aus 1,00 g der so erhaltlichen Paste wird eine Kugel geformt.
Die Zeit, die für einen vollständigen Zerfall der Kugel in die Einzelbestandteile unter Bildung einer Waschflotte erforderlich war, ist ebenfalls in der Tabelle angegeben.

**Tabelle**

| Vergleichsbeispiel | Ethylenoxidderivat | Molmasse M_{N} | Zeit [min] für den vollständigen Zerfall der Kugel, die aus der Mischung geformt wurde |
|---|---|---|---|
| 2 | Polyethylenglykol | 300 | 31 |
| 3 | Polyethylenglykol | 600 | 32 |
| 4 | Polyethylenglykol | 1500 | 34 |
| 5 | Polyethylenglykol | 4000 | 32 |
| 6 | Additions produkt von 34 Mol Ethylenoxid an 1 Mol C₁₃/C₁₅ Alkohol | | 34 |

### Beispiel 1

25 g handelsübliche Persil® Megaperls werden mit 3,5 g Wasser bei 60°C zu einem Brei verrührt und mit 0,5 g eines durch Umsetzung mit n-Butylchlorid vollständig endgruppenverschlossenen Additionsproduktes von 30 Mol Ethylenoxid an 1 Mol Glycerin innig vermischt. Aus 1,00 g der so erhältlichen Paste wird eine Kugel geformt. Man bestimmt dann die Zeit, die für einen vollständigen Zerfall der Kugel in die Einzelbestandteile unter Bildung einer Waschflotte erforderlich ist, in dem man die Kugel in 500 ml Wasser bei 30°C mit einem Magnetrührer bei 500 U/min rührt. Die Kugel war nach einer Zeit von 25 min vollständig in die Einzelbestandteile unter Bildung einer Waschflotte zerfallen.

### Beispiel 2

Beispiel 1 wird mit der einzigen Ausnahme wiederholt, daß man ein durch Umsetzung mit 10 Mol Butylenoxid hydrophobiertes Additionsprodukt von 30 Mol Ethylenoxid an 1 Mol Trimethylolpropan als Mittel zur Erhöhung der Lösegeschwindigkeit einsetzt. Zur Herstellung dieser Verbindung wurde zunächst Trimethylpropan ethoxyliert und das dabei erhaltene Anlagerungsprodukt anschließend mit Butylenoxid umgesetzt. Nach 26 minütigem Rühren der aus der Mischung geformten Kugel in 500 ml Wasser bei 30°C und 500 U/min war die Kugel vollständig in die Einzelbestandteile unter Bildung einer Waschflotte zerfallen.

### Beispiel 3

Beispiel 1 wird mit der einzigen Ausnahme wiederholt, daß man als Mittel zur Erhöhung der Lösegeschwindigkeit ein Umsetzungsprodukt einsetzt, das durch nacheinander erfolgende Addition von 15 Mol Ethylenoxid und 4 Mol Butylenoxid an 1 Mol Glycerin hergestellt wurde. Nach einer Rührzeit von 25 Minuten der aus der Mischung geformten Kugel in 500 ml Wasser bei 30°C und 500 U/min war die Kugel vollständig in die Einzelbestandteile unter Bildung einer Waschflotte zerfallen.

### Beispiel 4

Beispiel 1 wird mit der einzigen Ausnahme wiederholt, daß man als Mittel zur Erhöhung der Lösegeschwindigkeit ein Umsetzungsprodukt einsetzt, das durch Addition von 30 Mol Ethylenoxid an 1 Mol Trimethylolpropan und vollständige Alkylierung mit Dimethylsulfat erhältlich ist. Nach einer Rührzeit von 27 min der aus der Mischung geformten Kugel in 500 ml Wasser bei 30°C und 500 U/min war die Kugel vollständig in die Einzelbestandteile unter Bildung einer Waschflotte zerfallen.

### Beispiel 5

Beispiel 1 wird mit der einzigen Ausnahme wiederholt, daß man als 1 Mittel zur Erhöhung der Lösegeschwindigkeit ein Umsetzungsprodukt einsetzt, das durch nacheinander erfolgende Alkoxylierung von 1 Mol Glycerin mit 20 Mol Ethylenoxid, 20 Mol Propylenoxid und Hydrophobierung mit 5 Mol Butylenoxid hergestellt wurde. Nach 24 minütigem Rühren der aus der Mischung geformten Kugel in 500 ml Wasser bei 30°C und 500 U/min war die Kugel vollständig in die Einzelbestandteile unter Bildung einer Waschflotte zerfallen.

## Patentansprüche

1. Verwendung von
- Umsetzungsprodukten, die durch Reaktion von mindestens dreiwertigen Alkoholen mit C₄- bis C₃₂-Epoxiden oder Styroloxid und anschließende Alkoxylierung mit Ethylenoxid und/oder Propylenoxid erhältlich sind,
- Umsetzungsprodukten, die durch Reaktion von mindestens dreiwertigen Alkoholen mit Ethylenoxid und/oder Propylenoxid und anschließende Hydrophobierung mit
(a) C₄- bis C₃₂-Epoxiden und/oder Styroloxid,
(b) C₁- bis C₂₀-Alkylierungsmitteln oder
(c) Fettsäuren mit 1 bis 5 C-Atomen im Molekül erhältlich sind,
als Zusatz zu teilchenförmigen Waschmittelformulierungen zur Erhöhung ihrer Lösegeschwindigkeit in Wasser in Mengen von 0,1 bis 10 Gew.-%, bezogen auf die Waschmittelformulierungen.

2. Verwendung nach Anspruch 1, dadurch gekennzeichnet, daß man hydrophobierte, alkoxylierte mindestens dreiwertige Alkohole einsetzt, die durch Alkoxylierung von 1 Mol eines mindestens dreiwertigen Alkohols mit 1 bis 100 Mol Ethylenoxid und/oder 1 bis 35 Mol Propylenoxid erhältlich sind und die 1 bis 30 C₄- bis C₃₀-Epoxid- oder Styroloxid-Einheiten enthalten.

3. Verwendung nach Anspruch 1, dadurch gekennzeichnet, daß man hydrophobierte, alkoxylierte mindestens dreiwertige Alkohole einsetzt, die durch Alkoxylierung von 1 Mol eines mindestens dreiwertigen Alkohols mit 1 bis 100 Mol Ethylenoxid und/oder 1 bis 35 Mol Propylenoxid und anschließenden Endgruppenverschluß der Alkoxylierungsprodukte mit
- C₁- bis C₂₀-Alkylierungsmitteln oder
- Fettsäuren mit 1 bis 5 C-Atomen im Molekül
erhältlich sind.

4. Verwendung nach Anspruch 1, dadurch gekennzeichnet, daß man hydrophobierte, alkoxylierte mindestens dreiwertige Alkohole einsetzt, die durch Alkoxylierung von 1 Mol eines mindestens dreiwertigen Alkohols mit 1 bis 50 Mol Ethylenoxid und Hydrophobierung mit 3 bis 10 Mol mindestens eines C₄- bis C₃₂-Epoxids erhältlich sind.

5. Verwendung nach Anspruch 1, dadurch gekennzeichnet, daß man hydrophobierte, alkoxylierte mindestens dreiwertige Alkohole einsetzt, die durch Alkoxylierung von 1 Mol eines mindestens dreiwertigen Alkohols mit 1 bis 50 Mol Ethylenoxid und Hydrophobierung mit einem C₁- bis C₆-Alkylierungsmittel erhältlich sind.

6. Verwendung nach einem der Ansprüche 1 bis 5, dadurch gekennzeichnet, daß man die lösegeschwindigkeitserhöhenden Mittel in Mengen von 0,5 bis 5 Gew.-%, bezogen auf die Waschmittelformulierungen, einsetzt.

7. Verwendung nach einem der Ansprüche 1 bis 6, dadurch gekennzeichnet, daß die Waschmittelformulierungen eine Schüttdichte von 550 bis 1000 g/l haben.

## Claims

1. The use of
- reaction products obtainable by reacting at least trihydric alcohols with C₄ to C₃₂ epoxides or styrene oxide and then alkoxylating with ethylene oxide and/or propylene oxide,
- reaction products obtainable by reacting at least trihydric alcohols with ethylene oxide and/or propylene oxide and then hydrophobizing with
(a) C₄ to C₃₂ epoxides and/or styrene oxide,
(b) C₁ to C₂₀ alkylating agents or
(c) fatty acids with 1 to 5 C atoms in the molecule,
as addition to particulate detergent formulations for increasing the rate of dissolution in water in amounts of from 0.1 to 10% by weight based on the detergent formulations.

2. The use as claimed in claim 1, wherein hydrophobized, alkoxylated at least trihydric alcohols obtainable by alkoxylating 1 mol of an at least trihydric alcohol with 1 to 100 mol of ethylene oxide and/or 1 to 35 mol of propylene oxide and containing 1 to 30 C₄ to C₃₀ epoxide or styrene oxide units are employed.

3. The use as claimed in claim 1, wherein hydrophobized, alkoxylated at least trihydric alcohols obtainable by alkoxylating 1 mol of an at least trihydric alcohol with 1 to 100 mol of ethylene oxide and/or 1 to 35 mol of propylene oxide and subsequent capping of the alkylation products with
- C₁ to C₂₀ alkylating agents or
- fatty acids with 1 to 5 C atoms in the molecule,
are employed.

4. The use as claimed in claim 1, wherein hydrophobized, alkoxylated at least trihydric alcohols obtainable by alkoxylating 1 mol of an at least trihydric alcohol with 1 to 50 mol of ethylene oxide and hydrophobizing with 3 to 10 mol of at least one C₄ to C₃₂ epoxide are employed.

5. The use as claimed in claim 1, wherein hydrophobized, alkoxylated at least trihydric alcohols obtainable by alkoxylating 1 mol of an at least trihydric alcohol with 1 to 50 mol of ethylene oxide and hydrophobizing with a C₁ to C₆ alkylating agent are employed.

6. The use as claimed in any of claims 1 to 5, wherein the dissolution rate-increasing agents are employed in amounts of from 0.5 to 5% by weight based on the detergent formulations.

7. The use as claimed in any of claims 1 to 6, wherein the detergent formulations have an apparent density of from 550 to 1 000 g/l.

## Revendications

1. Utilisation
- de produits de réaction qui peuvent être obtenus par réaction d'alcools au moins trivalents avec des époxydes en C₄-C₃₂ ou de l'oxyde de styrène et alcoxylation ultérieure avec de l'oxyde d'éthylène et/ou de l'oxyde de propylène,
- de produits de réaction qui peuvent être obtenus par réaction d'alcools au moins trivalents avec de l'oxyde d'éthylène et/ou de l'oxyde de propylène et une étape ultérieure pour rendre hydrophobe avec
(a) des époxydes en C₄-C₃₂ et/ou de l'oxyde de styrène,
(b) des agents d'alkylation en C₁-C₂₀, ou
(c) des acides gras comportant 1 à 5 atomes de C dans la molécule,
comme addition à des formulations de produit de lavage particulaires pour augmenter leur vitesse de dissolution dans l'eau en des quantités de 0,1 à 10% en poids, par rapport aux formulations de produit de lavage.

2. Utilisation suivant la revendication 1, caractérisée en ce qu'on met en oeuvre des alcools au moins trivalents alcoxylés, rendus hydrophobe, qui peuvent être obtenus par alcoxylation de 1 mole d'un alcool au moins trivalent avec 1 à 100 moles d'oxyde d'éthylène et/ou 1 à 35 moles d'oxyde de propylène et qui contiennent 1 à 30 unités d'époxyde en C₄-C₃₀ ou d'oxyde de styrène.

3. Utilisation suivant la revendication 1, caractérisée en ce qu'on met en oeuvre des alcools au moins trivalents alcoxylés, rendus hydrophobe, qui peuvent être obtenus par alcoxylation de 1 mole d'un alcool au moins trivalent avec 1 à 100 moles d'oxyde d'éthylène et/ou 1 à 35 moles d'oxyde de propylène et fermeture ultérieure des groupes terminaux des produits d'alcoxylation avec
- des agents d'alkylation en C₁-C₂₀, ou
- des acides gras comportant 1 à 5 atomes de C dans la molécule.

4. Utilisation suivant la revendication 1, caractérisée en ce qu'on met en oeuvre des alcools au moins trivalents alcoxylés, rendus hydrophobe, qui peuvent être obtenus par alcoxylation de 1 mole d'un alcool au moins trivalent avec 1 à 50 moles d'oxyde d'éthylène et par une étape pour rendre hydrophobe avec 3 à 10 moles d'au moins un époxyde en C₄-C₃₂.

5. Utilisation suivant la revendication 1, caractérisée en ce qu'on met en oeuvre des alcools au moins trivalents alcoxylés, rendus hydrophobe, qui peuvent être obtenus par alcoxylation de 1 mole d'un alcool au moins trivalent avec 1 à 50 moles d'oxyde d'éthylène et par une étape pour rendre hydrophobe avec un agent d'alkylation en C₁-C₆.

6. Utilisation suivant l'une des revendications 1 à 5, caractérisée en ce qu'on met en oeuvre les agents augmentant la vitesse de dissolution en des quantités de 0,5 à 5% en poids, par rapport aux formulations de produit de lavage.

7. Utilisation suivant l'une des revendications 1 à 6, caractérisée en ce que les formulations de produit de lavage ont une masse volumique apparente de 550 à 1000 g/l.
